# FASCICULE DE BREVET EUROPEEN

(11) **EP 1 104 846 B1**
(45) Date de publication et mention de la délivrance du brevet: **28.09.2005**
(21) Numéro de dépôt: 00403179.5
(22) Date de dépôt: 15.11.2000
(51) Int. Cl.: F02F 3/12, F02F 3/14, F02F 3/26, F02B 23/06

(54) **Procédé de renforcement d'un piston de moteur à combustion interne et piston renforcé selon le procédé**
Verfahren zur Verstärkung eines Brennkraftmaschinenkolbens und verstärkter Kolben nach dem Verfahren
Process for reinforcing a combustion engine piston and a reinforced piston according to such process

(30) Priorité: 02.12.1999 FR 9915186
(43) Date de publication de la demande: 06.06.2001
(73) Titulaire: Peugeot Citroen Automobiles, 92200 Neuilly Sur Seine (FR)
(72) Inventeur: Engler, Bernard, 78570 Andresy (FR); Monin, Martine, 92400 Courbevoie (FR)
(74) Mandataire: De Cuenca, Emmanuel Jaime

(56) Documents cités:
- DE-A- 2 136 594
- DE-A- 19 901 770
- FR-A- 2 144 478
- PATENT ABSTRACTS OF JAPAN vol. 1997, no. 02, 28 février 1997 (1997-02-28) & JP 08 267266 A (NISSAN MOTOR CO LTD), 15 octobre 1996 (1996-10-15)

## Description

L'invention se rapporte à un procédé de renforcement d'un piston de moteur à combustion interne, ainsi qu'à un piston renforcé selon le procédé.

Dans les moteurs à allumage par compression ou les moteurs Diesel à injection directe notamment, les pistons sont usinés, de préférence, de façon à présenter une cavité ou préchambre appelée encore bol. Le bol est formé sur la surface supérieure du piston, qui est orientée vers la culasse. Le bol et la culasse définissent une chambre de combustion à l'intérieur du cylindre, dans laquelle débouchent l'injecteur et les conduits d'admission et d'échappement.

Dans ce type de géométrie de piston, la lèvre du bol, c'est-à-dire le bord délimitant la préchambre, a tendance à être surchauffée et à se fissurer. La fatigue thermomécanique s'exerçant dans cette zone peut entraîner la défaillance du piston par un enchaînement d'avaries. En particulier, le piston peut se fissurer progressivement, ce qui peut entraîner une micro-fusion et la ruine du piston.

Le document FR 2 237 064 décrit un piston de moteur à combustion interne dans lequel on vient disposer un écran à paroi mince, constitué d'un métal réfractaire, sur une partie de la surface du bol. L'écran métallique est mis en place lors de la coulée du piston, en le montant sur un noyau à éléments multiples, avant l'opération de coulée.

Cependant, l'opération de mise en place de l'écran s'avère fastidieuse. Par ailleurs, ce type d'écran, qui est constitué d'un acier inoxydable, présente une adhérence précaire. En outre, ce type d'écran empêche un transfert satisfaisant de la chaleur vers le piston, ce qui entraîne une augmentation de la température des chambres de combustion de la culasse et des zones inter-cylindres du bloc cylindre. Cette augmentation en température provoque un chargement thermodynamique rédhibitoire dans les chambres de combustion de la culasse et des zones inter-cylindres du bloc cylindre, en particulier dans les moteurs diesel suralimentés à injection directe.

Le document DE19901770A1 décrit un procédé de fabrication d'un piston, consistant usiner une gorge circulaire sur la face supérieure du piston, puis à disposer dans la gorge une première paire de tronçons de fil en alliage d'aluminium contenant du Cuivre et du Nickel de façon diamétralement opposée et une seconde paire de tronçons de fil également de façon diamétralement opposée. Les tronçons de fils sont ensuite fondus et le piston usiné de façon à former un revêtement de renforcement sur l'arête d'un bol. Le document DE-A-2 136 594 décrit également le renforcement du bol d'un piston avec un alliage d'aluminium contenant du Cuivre et du Nickel.

Cependant, ce type de renforcement ne résout pas complètement les problèmes de tenue du piston à chaud.

Un but de la présente invention est de proposer un procédé de renforcement d'un piston de moteur à combustion interne comportant une cavité ou bol, le procédé comportant une étape de dépôt d'un alliage contenant des Cuivre et du Nickel, par fusion de ce dernier, sur au moins une partie de l'arête du bol, conforme au préambule de la revendication principale. L'invention a pour objet de proposer un procédé de ce type palliant tout ou partie des inconvénients de l'art antérieur relevés ci-dessus.

Ce but est atteint par le fait que le procédé de renforcement d'un piston de moteur à combustion interne, est caractérisé en ce que partie caractérisante de la revendication 1 sous les références numériques, cf. page 10.

Par ailleurs, l'invention peut comporter l'une ou plusieurs des caractéristiques suivantes :
- le dépôt est réalisé au moyen d'un faisceau à haute énergie, par projection ou refusion de l'alliage sous forme de poudre,
- le dépôt est réalisé dans au moins une gorge usinée dans la face supérieure du piston brut,
- au moins une partie de la ou des gorges est usinée selon une direction sensiblement parallèle à l'axe de symétrie longitudinal du piston,
- au moins une partie de la ou des gorges est usinée selon une direction inclinée par rapport à l'axe de symétrie longitudinal du piston,
- la surface d'extrémité supérieure du piston usiné aux cotes finales comporte au moins une zone plane et faiblement renfoncée qui est adjacente au bol, le dépôt étant réalisé sur la ou les portions du bord du bol qui sont contiguës aux zones renfoncées,
- le dépôt est réalisé sur la totalité du bord circulaire du bol,
- le dépôt comporte du Bore,
- le dépôt comporte du Vanadium et/ou du Nobium,
- le dépôt contient 0,01 à 1% en masse de Bore,
- le dépôt contient 0,1 à 3% en masse de Vanadium et 0,1 à 2% de Nobium,
- le dépôt est constitué d'un alliage contenant au moins l'un des constituants suivant dont les proportions sont exprimées en masse par rapport à la masse totale du dépôt : 1 à 10% de Fer, 0,1 à 12% d'Aluminium; 0,5 à 10% de Chrome et 0,5 à 10% de Silicium,

Un autre but de la présente invention est de proposer un piston renforcé selon le procédé ci-dessus.

Ce but est atteint par le fait que le piston est pourvu d'un dépôt d'alliage obtenu par le procédé de renforcement conforme à l'une quelconque ou plusieurs des caractéristiques précédentes.

Selon une autre particularité le piston est constitué d'un alliage d'aluminium.

D'autres particularités et avantages apparaîtront à la lecture de la description ci-après, faite en référence aux figures dans lesquelles :
- la figure 1 représente une vue de dessus d'un exemple de réalisation d'un piston de moteur selon l'art antérieur,
- la figure 2 représente une vue schématique, en coupe longitudinale, d'une partie d'un piston conforme à l'invention, illustrant une étape du procédé de renforcement selon l'invention,
- la figure 3 représente une vue schématique, en coupe longitudinale, d'une partie d'un piston conforme à l'invention, illustrant une étape du procédé de renforcement, dans un second mode de réalisation de l'invention,
- la figure 4 représente une vue en coupe longitudinale d'un piston renforcé conformément à l'invention,
- les figures 5 et 6 représentent de vues schématiques de dessus, illustrant respectivement deux modes de réalisation d'un piston renforcé selon l'invention.

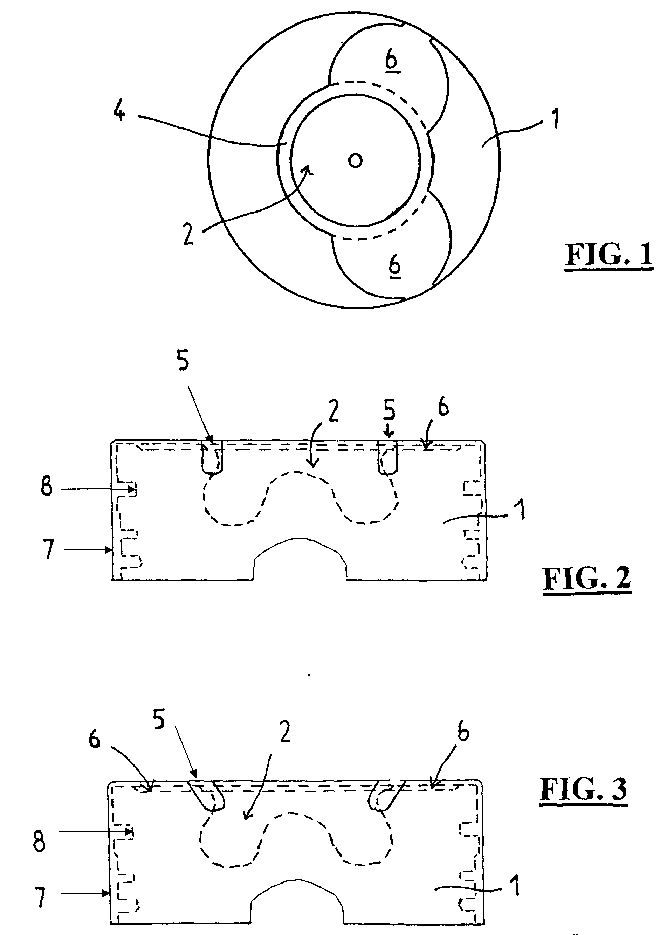

La figure 1 représente une vue de dessus d'un piston 1 de type connu. La face supérieure du piston 1 comporte un bol 2, c'est-à-dire une cavité, qui est délimité par une arête ou bord circulaire 4. La face supérieure du piston 1 comporte également deux zones 6 plane et faiblement renfoncée qui sont adjacentes au bol 2. Classiquement, chacune des zones renfoncées 6 est prévue pour coopérer avec une soupape respective (non représentée), lorsque la soupape arrive en bout de course. Les zones renfoncées 6 sont situées dans un plan parallèle au plan de la face supérieure du piston et sont légèrement en retrait par rapport à cette face supérieure. De préférence, chacune des zones renfoncées 6 a une forme sensiblement circulaire. Par ailleurs, les zones renfoncées 6 sont disposées à 120 degrés environ l'une par rapport à l'autre autour de l'axe de symétrie longitudinal du piston 1.

Chacune des zones renfoncées 6 est adjacente au bord du bol 2, c'est à dire que qu'une partie de chaque zone renfoncée 6 est délimitée par ce bord 4.

Selon l'invention, un dépôt 3 en alliage est réalisé sur au moins une partie du bord 4 du bol 2. Le dépôt 3 est réalisé par la fusion de l'alliage. De préférence, l'alliage est un alliage non-ferreux, c'est-à-dire comportant une proportion de Fer inférieure à 50%.

Par exemple, le dépôt 3 en alliage non-ferreux est effectué par transfert à l'état liquide ou rechargement et, de préférence, par rechargement laser. C'est-à-dire que le dépôt 3 est créé par la fusion d'un matériau d'apport, au moyen, par exemple, d'un faisceau à haute intensité d'énergie laser ou faisceau d'électron couramment appelé "bombardement électronique". Par exemple, le matériau non-ferreux est projeté dans le faisceau laser sous forme de poudre, au niveau de la surface du piston 1 qui est à recouvrir.

En variante, l'alliage peut être déposé sous forme de poudre pré-alliée dans la cavité, la poudre pré-alliée étant ensuite fondue par un balayage de faisceau laser.

Le dépôt est constitué d'un alliage contenant du Cuivre et du Nickel.

Le dépôt contient 45 à 90% en masse de Cuivre, et 1 à 30% en masse de Nickel et 1 à 10% de Cobalt. De plus, le dépôt 3 peut contenir l'un ou plusieurs des constituants suivant dont les proportions sont exprimées en masse par rapport à la masse totale du dépôt : 1à 10% de Fer, 0,1 à 12% d'Aluminium; 0,5 à 10% de Chrome et 0,5 à 10% de Silicium.

Avantageusement, le dépôt peut contenir 0,01 à 1% en masse de Bore.

Dans un mode de réalisation de l'invention, le dépôt est constitué d'une base de Cuivre contenant, 15 à 20% de Nickel, 6 à 8% de Cobalt, 2 à 3% de Fer, 1 à 3 % de Chrome et 2 à 4% de Silicium. Par exemple, le dépôt contient 60 à 65% de Cuivre.

Dans un autre mode de réalisation préféré de l'invention, le dépôt 3 est constitué d'un alliage contenant, par rapport à la masse totale du dépôt : 18 à 25% de Nickel, 4 à 6% de Molybdène, 6 à 6% de Cobalt, 2,5 à 4% de Fer, 0,8 à 1,5% de Chrome, et 0,3 à 0,8% de Silicium et le solde en Cuivre.

La figure 2 illustre un exemple de réalisation du procédé de renforcement d'un piston selon l'invention. Une ligne continue 7 illustre le profil brut du piston 1, c'est-à-dire avant son usinage aux cotes finales. Le profil du piston 1 usiné est représenté, quant à lui, par une ligne discontinue 8.

Pour déposer localement le dépôt, une ou plusieurs gorges 5 sont usinées sur la face supérieure du piston brut. La gorge 5 est usinée selon une direction sensiblement parallèle à l'axe de symétrie longitudinal du piston 1, à l'emplacement correspondant au bord 4 du bol usiné aux cotes finales.

Le rechargement laser de l'alliage est effectué dans la gorge 5 usinée. Le piston 1 brut est ensuite usiné aux cotes finales, c'est-à-dire avec le bol 2. L'arête 4 du bol 2 est ainsi protégée par le dépôt 3.

Bien entendu, l'invention n'est pas limitée à cette forme de réalisation. Ainsi, comme représenté à la figure 3, la ou les gorges 5 peuvent être usinées selon une direction inclinée par rapport à l'axe de symétrie longitudinal du piston 1. En particulier, les gorges 5 peuvent être inclinées vers l'intérieur du piston, du haut vers le bas du piston 1. De cette façon, le dépôt est réalisé de manière privilégiée sur la partie supérieure du bord du bol 2. De la même façon, les gorges peuvent être inclinées vers l'extérieur du piston 1 de haut en bas, pour que le dépôt soit effectué de manière privilégiée sur la partie inférieure du bord du bol 2.

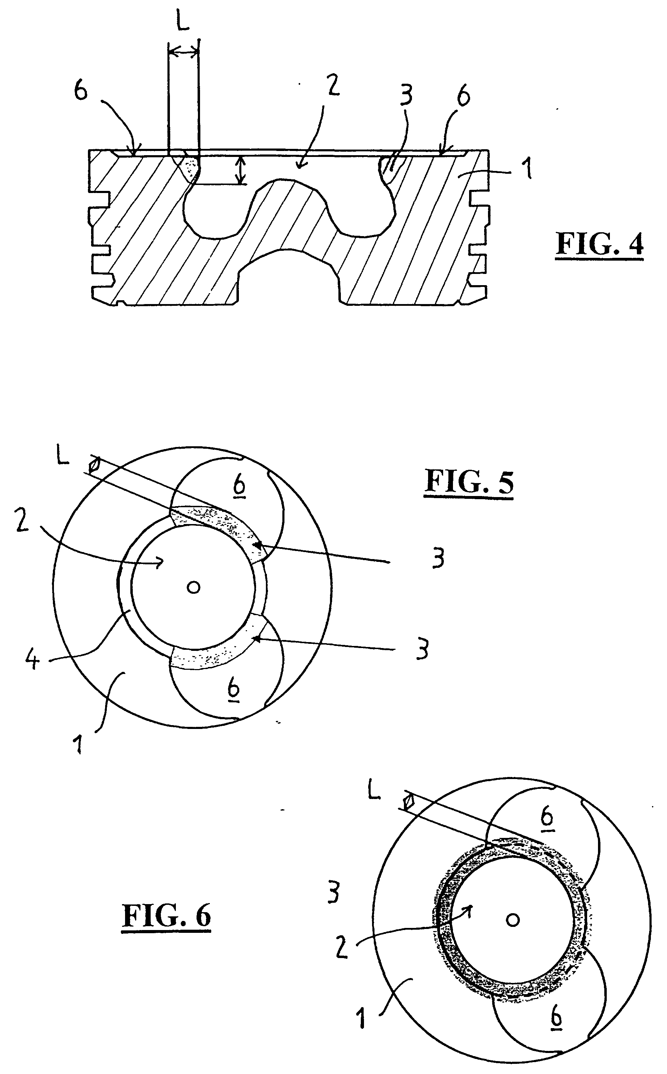

La figure 4 illustre un piston 1 fini pourvu d'un tel dépôt 3. De préférence, selon une direction sensiblement perpendiculaire à l'axe du piston, le dépôt 3 a une largeur L comprise entre 3 et 5 mm environ. De la même façon, selon une direction sensiblement parallèle à l'axe du piston, la hauteur H du dépôt 3 peut être comprise entre 3 et 5 mm environ.

Comme représenté à la figure 5, le dépôt 3 peut être déposé uniquement sur les portions du bord 4 du bol 2 qui sont contiguës aux zones renfoncées 6.

Dans une forme de réalisation préférée de l'invention représentée à la figure 6, le dépôt est réalisé sur la totalité du bord circulaire du bol 2.

On conçoit donc aisément que le procédé selon l'invention permet de renforcer de manière simple un piston. Le piston est renforcé localement par apport d'alliage intégré au substrat par fusion in situ. L'invention est particulièrement adaptée aux pistons constitués d'un métal léger, tel qu'un alliage d'aluminium.

En particulier, on constate que le piston renforcé selon l'invention a une résistance mécanique à chaud améliorée par rapport à l'art antérieur. La solution solide du dépôt Ni-Cu s'avère bien compatible avec le substrat aluminium. De plus, lors de la fusion du dépôt, des composés du type Al₂Cu, NiAl₃, Ni₂Al₃, NiAl, et Ni₃Al se forment dans la zone de mixion avec l'aluminium du piston pour contribuer à cette résistance.

Ainsi, le dépôt de renforcement selon l'invention, présente une bonne adhérence au piston, une bonne résistance à la fatigue thermique, un bon comportement vis-à-vis des huiles moteur, une bonne conductivité thermique. Par ailleurs, le dépôt selon l'invention présente une ductilité satisfaisante et un coefficient de dilatation proche de celui de l'aluminium.

En variante on peut envisager de déposer l'alliage décrit ci-dessus par un autre procédé que le rechargement par faisceau à haute énergie, par exemple par la technologie dite à micro-plasma.

Enfin, bien que l'invention ait été décrite en liaison avec des modes de réalisation particuliers, elle comprend tous les moyens décrits qui entrent dans le cadre de la portée definie par la revendication principale.

## Revendications

1. Procédé de renforcement d'un piston (1) de moteur à combustion interne dans lequel le piston (1) comporte une cavité ou bol (2), le procédé comportant une étape de dépôt (3) d'un alliage contenant du Cuivre et du Nickel, par fusion de ce dernier, sur au moins une partie de l'arête ou bord du bol (2), **caractérisé en ce que** le dépôt (3) est constitué d'un alliage contenant 45 à 90% en masse de Cuivre, 1 à 30% en masse de Nickel et 1 à 10% en masse de Cobalt.

2. Procédé de renforcement d'un piston (1) selon la revendication 1, **caractérisé en ce que** le dépôt (3) est réalisé au moyen d'un faisceau à haute énergie, par projection ou refusion de l'alliage sous forme de poudre.

3. Procédé de renforcement selon la revendication 1 ou 2, **caractérisé en ce que** le dépôt (3) est réalisé dans au moins une gorge (5) usinée dans la face supérieure du piston (1) brut.

4. Procédé de renforcement selon la revendication 3 **caractérisé en ce qu'**au moins une partie de la ou des gorges (5) est usinée selon une direction sensiblement parallèle à l'axe de symétrie longitudinal du piston (1).

5. Procédé de renforcement selon la revendication 3 ou 4 **caractérisé en ce qu'**au moins une partie de la ou des gorges (5) est usinée selon une direction inclinée par rapport à l'axe de symétrie longitudinal du piston (1).

6. Procédé de renforcement selon l'une quelconque des revendications 1 à 5 dans lequel la surface d'extrémité supérieure du piston (1) usiné aux cotes finales comporte au moins une zone (6) plane et faiblement renfoncée qui est adjacente au bol (2), **caractérisé en ce que** le dépôt (3) est réalisé sur la ou les portions du bord du bol (2) qui sont contiguës aux zones (6) renfoncées.

7. Procédé de renforcement selon l'une quelconque des revendications 1 à 6, **caractérisé en ce que** le dépôt (3) est réalisé sur la totalité du bord circulaire du bol (2).

8. Procédé de renforcement selon l'une quelconque des revendications précédentes, **caractérisé en ce que** le dépôt (3) comporte du Bore.

9. Procédé de renforcement selon l'une quelconque des revendications précédentes, **caractérisé en ce que** le dépôt (3) comporte du Vanadium et/ou du Nobium.

10. Procédé de renforcement selon l'une quelconque des revendications précédentes, **caractérisé en ce que** le dépôt (3) contient 0,01 à 1% en masse de Bore.

11. Procédé de renforcement selon l'une quelconque des revendications précédentes, **caractérisé en ce que** le dépôt (3) contient 0,1 à 3% en masse de Vanadium et 0,1 à 2% de Nobium.

12. Procédé de renforcement selon l'une quelconque des revendications précédentes, **caractérisé en ce que** le dépôt (3) est constitué d'un alliage contenant au moins l'un des constituants suivant dont les proportions sont exprimées en masse par rapport à la masse totale du dépôt : 1 à 10% de Fer, 0,1 à 12% d'Aluminium; 0,5 à 10% de Chrome et 0,5 à 10% de Silicium.

13. Piston (1) constitué d'un métal léger, **caractérisé en ce qu'**il est pourvu d'un dépôt d'alliage (3) obtenu par le procédé de renforcement conforme à l'une quelconque des revendications précédentes.

14. Piston (1) selon la revendication 13, **caractérisé en ce qu'**il est constitué d'un alliage d'aluminium.

## Patentansprüche

1. Verfahren zur Verstärkung eines Kolbens (1) einer Brennkraftmaschine, bei dem der Kolben (1) eine Aushöhlung oder Schale (2) aufweist, wobei das Verfahren einen Schritt des Aufbringens (3) einer Legierung mit Kupfer und Nickel durch Schmelzen an mindestens einem Abschnitt der Kante oder des Rands der Schale (2) umfasst, **dadurch gekennzeichnet, dass** der Überzug (3) aus einer Legierung mit 45 bis 90 Massenprozent Kupfer, 1 bis 30 Massenprozent Nickel und 1 bis 10 Massenprozent Kobalt besteht.

2. Verfahren zur Verstärkung eines Kolbens (1) nach Anspruch 1, **dadurch gekennzeichnet, dass** der Überzug (3) mittels eines Strahls mit hoher Energie durch Spritzen oder Schmelzen der pulverförmigen Legierung hergestellt wird.

3. Verfahren zur Verstärkung nach Anspruch 1 oder 2, **dadurch gekennzeichnet, dass** der Überzug (3) in mindestens einem Hals (5) in der Oberseite des rohen Kolbens (1) hergestellt wird.

4. Verfahren zur Verstärkung nach Anspruch 3, **dadurch gekennzeichnet, dass** mindestens ein Abschnitt des Halses oder der Hälse (5) im Wesentlichen parallel zur Längssymmetrieachse des Kolbens (1) verläuft.

5. Verfahren zur Verstärkung nach Anspruch 3 oder 4, **dadurch gekennzeichnet, dass** mindestens ein Abschnitt des Halses oder der Hälse (5) gegenüber der Längssymmetrieachse des Kolbens (1) geneigt ist.

6. Verfahren zur Verstärkung nach einem der Ansprüche 1 bis 5, bei dem die obere Endfläche des an den Endmaßen bearbeiteten Kolbens (1) mindestens einen ebenen und leicht verstärkten Bereich (6) aufweist, der an die Schale (2) angrenzt, **dadurch gekennzeichnet, dass** der Überzug (3) an dem oder den Abschnitten des Rands der Schale (2) hergestellt ist, die an die verstärkten Bereiche angrenzen.

7. Verfahren zur Verstärkung nach einem der Ansprüche 1 bis 6, **dadurch gekennzeichnet, dass** der Überzug (3) am gesamten kreisförmigen Rand der Schale (2) hergestellt ist.

8. Verfahren zur Verstärkung nach einem der vorhergehenden Ansprüche, **dadurch gekennzeichnet, dass** der Überzug (3) Bor enthält.

9. Verfahren zur Verstärkung nach einem der vorhergehenden Ansprüche, **dadurch gekennzeichnet, dass** der Überzug (3) Vanadium und/ oder Nobium enthält.

10. Verfahren zur Verstärkung nach einem der vorhergehenden Ansprüche, **dadurch gekennzeichnet, dass** der Überzug (3) 0,01 bis 1 Massenprozent Bor enthält.

11. Verfahren zur Verstärkung nach einem der vorhergehenden Ansprüche, **dadurch gekennzeichnet, dass** der Überzug (3) 0,1 bis 3 Massenprozent Vanadium und 0,1 bis 2 Prozent Nobium enthält.

12. Verfahren zur Verstärkung nach einem der vorhergehenden Ansprüche, **dadurch gekennzeichnet, dass** der Überzug (3) aus einer Legierung mit mindestens einem der folgenden Bestandteile besteht, deren Massenanteil in Bezug auf die Gesamtmasse des Überzugs ausgedrückt ist: 1 bis 10 Prozent Eisen, 0,1 bis 12 Prozent Aluminium; 0,5 bis 10 Prozent Chrom und 0,5 bis 10 Prozent Silizium.

13. Kolben (1) aus Leichtmetall, **dadurch gekennzeichnet, dass** er mit einem Überzug (3) aus Legierung versehen ist, der durch das Verfahren zur Verstärkung nach einem der vorhergehenden Ansprüche erhalten wurde.

14. Kolben (1) nach Anspruch 13, **dadurch gekennzeichnet, dass** er aus Aluminiumlegierung besteht.

## Claims

1. Method for reinforcement of a piston (1) of an internal combustion engine, in which the piston (1) comprises a cavity or bowl (2), the method comprising a step of depositing (3) an alloy containing Copper and Nickel, by melting the latter, on at least part of the edge or rim of the bowl (2), **characterised in that** the deposit (3) is constituted by an alloy containing 45 to 90% by mass of Copper, 1 to 30% by mass of Nickel and 1 to 10% by mass of Cobalt.

2. Method for reinforcement of a piston (1) according to Claim 1, **characterised in that** the deposit (3) is produced by means of a high-energy beam, by spraying onto or remelting the alloy in powder form.

3. Reinforcement method according to Claim 1 or 2, **characterised in that** the deposit (3) is produced in at least one groove (5) machined into the upper face of the unfinished piston (1).

4. Reinforcement method according to Claim 3 **characterised in that** at least part of the groove or grooves (5) is machined in a direction substantially parallel to the longitudinal axis of symmetry of the piston (1).

5. Reinforcement method according to Claim 3 or 4 **characterised in that** at least part of the groove or grooves (5) is machined in a direction oblique to the longitudinal axis of symmetry of the piston (1).

6. Reinforcement method according to any one of Claims 1 to 5, in which the upper outermost surface of the piston (1) machined to the final dimensions comprises at least one flat, slightly recessed zone (6) that is adjacent to the bowl (2), **characterised in that** the deposit (3) is produced on the portion or portions of the rim of the bowl (2) that are contiguous to the recessed zones (6).

7. Reinforcement method according to any one of Claims 1 to 6, **characterised in that** the deposit (3) is produced over the whole of the circular rim of the bowl (2).

8. Reinforcement method according to any one of the preceding claims, **characterised in that** the deposit (3) comprises Boron.

9. Reinforcement method according to any one of the preceding claims, **characterised in that** the deposit (3) comprises Vanadium and/or Nobium.

10. Reinforcement method according to any one of the preceding claims, **characterised in that** the deposit (3) contains 0.01 to 1% by mass of Boron.

11. Reinforcement method according to any one of the preceding claims, **characterised in that** the deposit (3) contains 0.1 to 3% by mass of Vanadium and 0.1 to 2% Nobium.

12. Reinforcement method according to any one of the preceding claims, **characterised in that** the deposit (3) is constituted by an alloy containing at least one of the following components, the proportions of which are expressed by mass relative to the total mass of the deposit: 1 to 10% Iron, 0.1 to 12% Aluminium; 0.5 to 10% Chromium and 0.5 to 10% Silicon.

13. Piston (1) constituted by a light metal, **characterised in that** it is provided with a deposit of alloy (3) produced by the reinforcement method in accordance with any one of the preceding claims.

14. Piston (1) according to Claim 13, **characterised in that** it is constituted by an aluminium alloy.
